# EUROPÄISCHE PATENTSCHRIFT

(11) **EP 3 230 036 B1**
(45) Veröffentlichungstag und Bekanntmachung des Hinweises auf die Patenterteilung: **19.12.2018**
(21) Anmeldenummer: 15817095.1
(22) Anmeldetag: 08.12.2015
(51) Int. Cl.: B29C 44/18, B60R 13/08

(54) **BAUTEIL ZUR ABSCHOTTUNG UND/ODER BEGRENZUNG EINES HOHLRAUMS**
COMPONENT FOR SEPARATING AND/OR DELIMITING A CAVITY
COMPOSANT DE CLOISONNEMENT ET/OU DE LIMITATION D'UNE CAVITÉ

(30) Priorität: 12.12.2014 EP 14197800
(43) Veröffentlichungstag der Anmeldung: 18.10.2017
(73) Patentinhaber: Sika Technology AG, 6340 Baar (CH)
(72) Erfinder: POCH, Sven, 6333 Hünenberg (CH); KRUCKER, Roman, 8047 Zürich (CH)
(74) Vertreter: Sika Patent Attorneys
(86) Internationale Anmeldenummer: PCT/EP2015/078907
(87) Internationale Veröffentlichungsnummer: WO 2016/091844

(56) Entgegenhaltungen:
- WO-A1-01/19667
- WO-A1-03/089221
- JP-A- 2000 238 589
- JP-A- 2000 271 934
- JP-A- 2001 088 741
- JP-A- 2003 237 624
- JP-A- 2006 001 472
- US-A- 5 506 025

## Beschreibung

### Technisches Gebiet

Die Erfindung betrifft ein Bauteil zur Abschottung und/oder Begrenzung eines Hohlraums nach Anspruch 1, eine Verwendung eines Bauteils zur Abschottung und/oder Begrenzung eines Hohlraums nach Anspruch 9 sowie ein Verfahren zur Tauchbeschichtung eines Hohlraumelements nach Anspruch 10.

### Stand der Technik

Vielfach weisen Hohlraumelemente, wie Karosserien und/oder Rahmen von Transport- und Fortbewegungsmitteln, insbesondere von Fahrzeugen zu Wasser oder zu Land oder von Luftfahrzeugen, Hohlräume auf, insbesondere um leichtgewichtige Konstruktionen zu ermöglichen. Derartige Hohlraumelemente verursachen jedoch verschiedene Probleme. Je nach Art des Hohlraums muss dieser zum Verhindern des Eindringens von Feuchtigkeit und Verschmutzungen, die zu Korrosion der Hohlraumelemente führen können, abgedichtet werden. Andererseits ist es oftmals auch wünschenswert, dass das Hohlraumelement über ein Tauchbeschichtungsverfahren mit einer Schutz- und/oder Lackschicht versehen werden kann (beispielsweise über eine kathodische Tauchlackierung = KTL). Während der Tauchbeschichtung ist es also möglich, dass die Oberfläche (innere Oberfläche) des Hohlraumelements in Kontakt mit der für die Tauchbeschichtung verwendeten Flüssigkeit kommen kann. Das fertige Hohlraumelement soll jedoch (nach der Tauchbeschichtung) möglichst gut vor dem Eindringen von Feuchtigkeit und Verschmutzungen geschützt sein, und insbesondere auch schallgedämpft sein. Die Patentschrift JP 2006 001472 A offenbart ein Bauteil gemäß dem Oberbegriff des Anspruchs 1.

### Darstellung der Erfindung

Der Erfindung liegt die Aufgabe zugrunde, ein Bauteil zur Abschottung und/oder Begrenzung eines Hohlraums aufzuzeigen, wobei einerseits eine Flüssigkeit für ein Beschichtungsverfahren vergleichsweise einfach aus dem Hohlraum entfernt werden kann und andererseits der Hohlraum dennoch auf einfache Weise gegenüber Feuchtigkeit und/oder Schmutz und/oder Schall abgedichtet werden kann.

Diese Aufgabe wird durch ein Bauteil nach Anspruch 1, die Verwendung eines Bauteils nach Anspruch 9 sowie ein Verfahren zur Tauchbeschichtung nach Anspruch 10 gelöst. Insbesondere wird die Aufgabe durch ein Bauteil zur Abschottung und/oder Begrenzung eines Hohlraums, insbesondere eines Kraftfahrzeugs, beispielsweise eines Schwellers, gelöst, wobei das Bauteil mindestens eine Öffnung (Loch) zum Abfließen einer Tauchlackierungsflüssigkeit aus dem Hohlraum, und mindestens ein expandierbares Element, das zumindest abschnittsweise neben dem (an dem) oder um die mindestens eine Öffnung angeordnet ist und zum Verschließen der Öffnung expandierbar ist, umfasst. Vorzugsweise umfasst das Bauteil weiterhin ein Umlenkelement (Dachelement), das die mindestens eine Öffnung zumindest teilweise überragt derart, dass das mindestens eine expandierende Element bei einer Expansion gegen das Umlenkelement stößt und von diesem blockiert wird.

Ein Kerngedanke der Erfindung liegt darin, eine Struktur vorzusehen, die es auf effektive Art und Weise ermöglicht, dass das expandierbare Element bei einer Expansion die zugeordnete Öffnung verschließt. Konkret wird dies über ein Blockierelement (Umlenkelement) erreicht, das so angeordnet ist, dass das expandierbare Element bei der Expansion gegen das Blockierelement stößt und von dort in Richtung der Öffnung (in die Öffnung hinein) weiter expandiert. Dadurch können Öffnungen, die es erlauben, die Tauchlackierungsflüssigkeit zu entfernen (z.B. durch Abfließen) auf einfache Weise geschlossen werden, so dass nach einer Expansion ein zuverlässiger Verschluss gegenüber Feuchtigkeit und/oder Flüssigkeit und/oder Schmutz und/oder Schall realisiert wird. Hierbei liegen also im nicht-expandierten Zustand des expandierbaren Elements Öffnungen vor, die im expandierten Zustand des expandierbaren Elements verschlossen sind.

Das expandierbare Element kann grundsätzlich aus einem beliebigen expandierbaren, insbesondere schäumbaren Material bestehen, das kontrolliert zur Expansion, insbesondere Schäumung, gebracht werden kann. Dieses Material kann dabei Verstärkungseigenschaften aufweisen oder nicht. Typischerweise wird das expandierbare (schäumbare) Material thermisch, durch Feuchtigkeit oder durch elektromagnetische Strahlung expandiert (geschäumt).

Ein schäumbares Material weist typischerweise ein chemisches oder ein physikalisches Treibmittel auf. Chemische Treibmittel sind organische oder anorganische Verbindungen, die sich unter Einfluss von Temperatur, Feuchtigkeit oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das schäumbare Material thermisch geschäumt, wobei chemische Treibmittel eingesetzt werden. Als chemische Treibmittel eignet sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel® von der Fa. Akzo Nobel, Niederlande, oder unter dem Handelsnamen Celogen® der Fa. Chemtura Corp., USA.

Eine für die Expansion (Schäumung) erforderliche Wärme kann durch externe oder durch interne Wärmequellen, wie einer exothermischen chemischen Reaktion, eingebracht werden. Das expandierbare (schäumbare) Material ist vorzugsweise bei einer Temperatur von ≤ 160 °C, insbesondere von 80 °C bis 150 °C, bevorzugt von 90 °C bis 140 °C, expandierbar (schäumbar).

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benz-oxalonen blockiert sein. Weiterhin eignen sich blockierte Polysocyanate wie sie beispielsweise in der Pulverlacktechnologie zum Einsatz kommen und beispielsweise unter den Handelsnamen Vestagon® BF 1350 und Vestagon® BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als schäumbare Materialien Treibmittel enthaltende Ethylen-Vinyl-Acetat-Zusammensetzungen.

Ebenfalls geeignete schäumbare Materialien werden beispielsweise unter dem Handelsnamen SikaBaffle® 240, SikaBaffle® 250 oder SikaBaffle® 255 von der Sika Corp., USA, vertrieben und sind in den Patenten US 5,266,133 und US 5,373,027 beschrieben.

Als schäumbare Materialien mit Verstärkungseigenschaften sind beispielsweise diejenigen bevorzugt, welche unter dem Handelsnamen SikaReinforcer® 941 von der Sika Corp., USA, vertrieben werden. Diese sind beschrieben in US 6,387,470.

Ein Material des Umlenkelementes kann ebenfalls grundsätzlich beliebig sein (solange es ausreichend Widerstand gegen die Expansion des expandierbaren Elements bietet). Bevorzugte Materialien sind Kunststoffe, insbesondere Polyurethane, Polyamide, Polyester und/oder Polyolefine, bevorzugt hochtemperaturbeständige Polymere; Metalle, insbesondere Aluminium und Stahl; oder gewachsene organische Materialien, insbesondere Holz- oder andere (gepresste) Faserwerkstoffe oder glasartige oder keramische Materialien. Besonders bevorzugt wird Polyamid, insbesondere Polyamid 6, Polyamid 6.6, Polyamid 11, Polyamid 12 oder ein Gemisch davon verwendet. Die übrigen Komponenten des Bauteils (abgesehen von dem expandierbaren Element) können (zumindest teil- und/oder abschnittsweise) aus den Materialien gebildet werden, wie sie für das Umlenkelement genannt wurden.

Ein Abstand zwischen Öffnung und zugeordnetem Umlenkelement ist vorzugsweise mindestens 2 mm, weiter vorzugsweise mindestens 4 mm und/oder höchstens 20 mm, vorzugsweise höchstens 15 mm. Nach der Expansion ist die Öffnung (vorzugsweise zu 100 %) gegenüber dem Durchtritt von Wasser verschlossen.

Das Bauteil kann ein Dämmelement, insbesondere zur akustischen Dämmung sein. Alternativ oder zusätzlich kann das Bauteil ein Abschottungselement zum Verschließen eines Hohlraums gegen den Durchtritt von Wasser sein. Alternativ oder zusätzlich kann das Bauteil ein (beliebiges) Formstück sein.

In einer konkreten Ausführungsform weist das expandierbare Element einen ringförmigen Abschnitt auf, der um die Öffnung herum angeordnet ist. Bei einer derartigen Ringform kann das expandierbare Material effektiv von einem Umlenkelement blockiert werden, so dass es zurück in Richtung der Öffnung gedrückt wird. In einer alternativen Ausführungsform weist das expandierbare Element einen streifenförmigen Abschnitt auf, der an einer Seite der Öffnung angeordnet ist. Eine derartige Struktur ist in konstruktiver Hinsicht besonders einfach und dennoch wirkungsvoll.

Die mindestens eine Öffnung (Loch) kann insbesondere ein Langloch sein. Unter einem "Langloch" soll insbesondere ein Loch verstanden werden, dessen Länge mindestens 1,5-mal, vorzugsweise mindestens 2,5-mal, weiter vorzugsweise mindestens 4-mal so lang ist wie dessen Breite. Grundsätzlich kann eine Vielzahl von Öffnungen für den Durchtritt der Tauchbeschichtungsflüssigkeit vorgesehen sein, beispielsweise mindestens zwei oder mindestens fünf oder mindestens zehn oder mindestens 30 und/oder höchstens 100 oder höchstens 50 oder höchstens 30.

Das Umlenkelement kann auf einem oder mehreren Stützelementen angeordnet sein. Vorzugsweise ragt das (ragen die) Stützelement (Stützelemente) von dem Bauteil ab. Das Stützelement kann platten-, rippen- oder leistenförmig sein. Ein Querschnitt des Stützelements (z.B. in einer zur Öffnung parallelen Ebene) kann rechteckig (ggf. mit abgerundeten Kanten) sein. Das Stützelement kann zumindest teilweise innerhalb der Öffnung (vorzugsweise vollständig innerhalb der Öffnung) angeordnet sein. Das Stützelement kann die Öffnung überspannen bzw. zwei gegenüberliegende Ränder der Öffnung miteinander verbinden. Das Stützelement kann zumindest teilweise an einem Rand der Öffnung angeordnet sein. Das Stützelement kann parallel oder senkrecht zu einer Längsrichtung der Öffnung ausgerichtet sein. In jedem Fall wird durch ein derartiges Stützelement auf einfache Art und Weise eine Positionierung des Umlenkelementes ermöglicht, so dass das expandierbare Element bei seiner Expansion effektiv in Richtung der Öffnung gedrückt wird.

Eine Form des Umlenkelementes (in einer Projektion auf eine durch die zugeordnete Öffnung definierte Ebene) korrespondiert vorzugsweise mit einer Form der Öffnung. Weist die Öffnung beispielsweise eine elliptische Form auf, so soll dies auch für das Umlenkelement gelten. Konkret kann die Öffnung durch zwei parallele Ränder begrenzt sein sowie ggf. zwei rundliche, die parallelen Ränder verbindende Enden. Das Umlenkelement kann dann die entsprechende Form aufweisen. Grundsätzlich kann das Umlenkelement eine Plattenform aufweisen. Falls das Stützelement eine Plattenform aufweist und das Umlenkelement eine Plattenform aufweist, stehen die jeweiligen Platten vorzugsweise zueinander senkrecht. In einer konkreten Ausführungsform ist ein plattenförmiges Stützelement vorgesehen, das senkrecht auf ein plattenförmiges Umlenkelement steht und in eine Breitenrichtung (des in diesem Falle länglichen Umlenkelements) ausgerichtet ist. Bei einer korrespondierenden Form des Umlenkelements (korrespondierend mit der Form der Öffnung) wird besonders effektiv unter geringem Materialeinsatz ein Verschließen der Öffnung ermöglicht.

Erfindungsgemäß liegt ein Rand einer Projektion eines Umlenkelementes auf eine durch die Öffnung definierte Ebene zumindest teilweise (ggf. vollständig) innerhalb der Öffnung. Auch durch ein derartiges (vergleichsweise kleines) Umlenkelement kann effektiv die Öffnung (mit geringem Materialaufwand) verschlossen werden. Insbesondere können Umlenkelement und Öffnung in einem Schritt hergestellt werden (was mit einem geringen Herstellungsaufwand verbunden ist).

Eine Projektion des Umlenkelements auf eine durch die Öffnung definierte Ebene kann die Öffnung (im Querschnitt) zu mindestens 50 %, vorzugsweise zu mindestens 70 %, weiter vorzugsweise zu mindestens 90 % ausfüllen (und/oder zu höchstens 99 %, vorzugsweise zu höchstens 95 %). Dabei wird die Öffnung effektiv verschlossen.

Das Umlenkelement kann ggf. auch größer als die Öffnung sein. Beispielsweise könnte das Umlenkelement in einem zusätzlichen Schritt hergestellt werden (was jedoch herstellungstechnisch vergleichsweise aufwendig ist).

Gemäß einem weiteren Aspekt der Erfindung ist das expandierbare Element derart expandiert, dass die Öffnung verschlossen ist.

Alle Elemente sowie Strukturen im Zusammenhang mit der Öffnung des Systems und deren Abdichtung können, wie weiter oben beschrieben, ausgebildet sein (dies betrifft insbesondere die Öffnung und/oder das expandierbare Element und/oder das Umlenkelement und/oder das Stützelement).

Gemäß einem weiteren Aspekt der Erfindung wird eine Verwendung des Bauteils der oben beschriebenen Art vorgeschlagen und zwar für die akustische Dämmung und/oder Abschottung (insbesondere gegenüber Wasser) und/oder die Verstärkung und/oder Aussteifung eines Hohlraums eines Land-, Luft- oder Wasserfahrzeugs und/oder eines Hohlraums eines Gebäudes.

Die oben genannte Aufgabe wird weiterhin gelöst durch ein Verfahren zur Tauchbeschichtung (und Abschottung und/oder Begrenzung eines Hohlraums) eines Hohlraumelements, das durch ein Bauteil der weiter oben beschriebenen Art abgeschottet und/oder begrenzt ist (werden kann), gekennzeichnet durch die Schritte:
- Eintauchen des Hohlraumelement in eine Tauchlackierungsflüssigkeit;
- Abscheiden von Material aus der Tauchlackierungsflüssigkeit auf das Hohlraumelement;
- Entfernen der Tauchlackierungsflüssigkeit (zumindest teilweise) über die zumindest eine Öffnung des Bauteils; und
- Expandieren des expandierbaren Elements derart, dass die mindestens eine Öffnung verschlossen wird, wobei das expandierbare Element während der Expansion gegen das Umlenkelement drückt und von diesem in Richtung der mindestens einen Öffnung geleitet wird.

Bei der Tauchbeschichtung kann es sich insbesondere um eine elektrophoretische Abscheidung handeln, bei der (kolloidale) Partikel unter Einfluss eines elektrischen Feldes abgeschieden werden. Konkret kann es sich um eine anodische Tauchlackierung (ATL) oder bevorzugt um eine kathodische Tauchlackierung (KTL) handeln. Unter einer kathodischen Tauchlackierung kann insbesondere eine "Kataphorese" verstanden werden, also ein elektrochemisches Verfahren, bei dem das Werkstück in einem Tauchbad beschichtet wird.

Eine Expansionsrate des Materials des expandierbaren Elements kann (z.B. bei einer Temperatur von 80 °C bis 160 °C, insbesondere 120 °C) mindestens 100 %, vorzugsweise mindestens 300 %, noch weiter vorzugsweise mindestens 500 %, noch weiter vorzugsweise mindestens 1000 °C betragen (und/oder höchstens 3000 %, vorzugsweise höchstens 1500 %, weiter vorzugsweise höchstens 1000 %). Eine Expansionsrate von 200 % bedeutet dabei, dass (z.B. Einwirkung von Wärme) das Material des expandierbaren Elements (ohne die Einwirkung äußerer Begrenzungselemente) nach der Expansion ein doppeltes Volumen einnimmt (also ein Volumen das 200 % des ursprünglichen Volumens ausmacht).

Ein (mittlerer oder maximaler) Abstand des expandierbaren Elements gegenüber dem Öffnungsrand ist vorzugsweise kleiner als 5 mm, vorzugsweise kleiner als 2 mm, weiter vorzugsweise 0 mm. Ein Öffnungsrand kann also (zumindest teilweise, ggf. vollständig) durch das expandierbare Element definiert werden.

### Kurze Beschreibung der Zeichnungen

Vorteile und Zweckmäßigkeiten der Erfindung ergeben sich im Übrigen aus der nachfolgenden Beschreibung von Ausführungsbeispielen und -aspekten, teilweise anhand der Figuren. Von diesen zeigen:
- Figur 1: einen Ausschnitt eines Bauteils zur Hohlraumabschottung von oben;
- Figur 2: den Ausschnitt gemäß Figur 1 in einer ersten Seitenansicht (wobei die vor dem ringförmigen Abschnitt des expandierbaren Elements liegenden Abschnitte weggelassen wurden);
- Figur 3: eine Seitenansicht des Ausschnitts gemäß Figur 1 und 2 (wobei die vor dem ringförmigen Abschnitt des expandierbaren Elements liegenden Abschnitte weggelassen wurden);
- Figur 4: eine Schrägansicht des Ausschnitts gemäß den Figuren 1 bis 3;
- Figur 5: eine Ansicht von oben eines Ausschnitts einer zweiten Ausführungsform des Bauteils (ohne Umlenkelement);
- Figur 6: einen schematischen Schnitt der Ausführungsform gemäß Figur 5 (einschließlich Umlenkelement); und

Es sind nur die für das unmittelbare Verständnis der Erfindung wesentlichen Elemente gezeigt. Gleichartige oder gleichwirkende Elemente sind mit dem gleichen Bezugszeichen versehen.

### Weg zur Ausführung der Erfindung

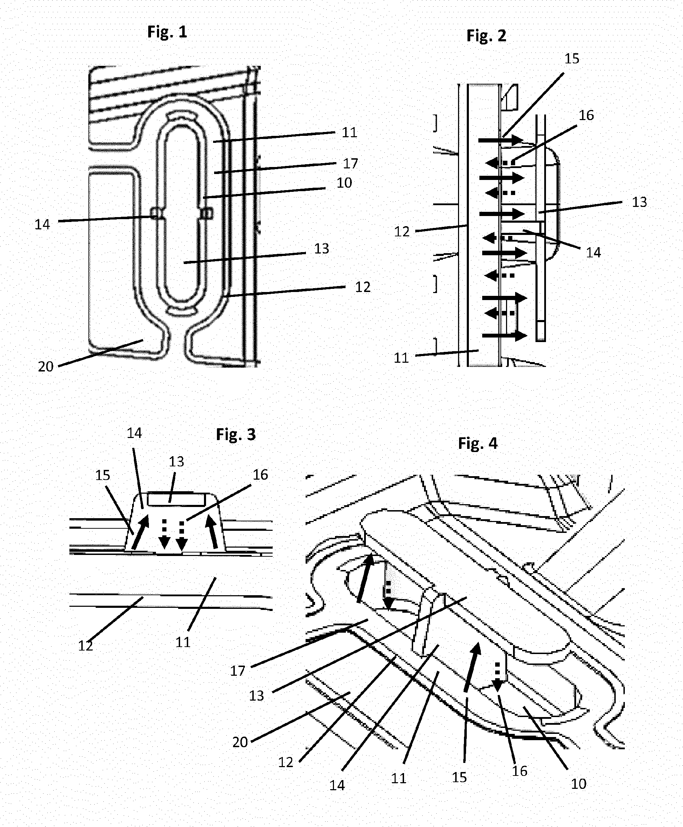

Die Figuren 1 bis 4 zeigen eine erste Ausführungsform des erfindungsgemäßen Bauteils. Das Bauteil weist ein Trägerelement 20 mit mehreren Öffnungen (Löcher) auf, wobei eine Öffnung 10 im Ausschnitt gemäß den Figuren 1 bis 4 angeordnet ist. Die Öffnung 10 ist im vorliegenden Fall ein Langloch. Um die Öffnung 10 herum ist ein ringförmiger Abschnitt eines expandierbares Elements 11 angeordnet, wobei der ringförmige Abschnitt 17 die Öffnung 10 vollständig umgibt (alternativ kann der ringförmige Abschnitt auch abschnittsweise unterbrochen sein). Konkret ist das expandierbare Element in einer um die Öffnung umlaufenden Rand-Eck-Ausnehmung (vergleichbar mit einer Nut) positioniert. Die Rand-Eck-Ausnehmung ist mit dem Bezugszeichen 12 gekennzeichnet.

Oberhalb der Öffnung 10 ist ein Umlenkelement (Dachelement) 13 angeordnet, dessen Form der Form der Öffnung 10 entspricht (voneinander abweichende Formen sind möglich). Eine Projektion des Umlenkelements 13 auf eine Ebene, in der die Öffnung 10 angeordnet ist, liegt innerhalb der Öffnung 10 (kann jedoch auch außerhalb liegen). Das Umlenkelement 13 ist auf einem Stützelement 14 abgestützt. Das Stützelement 14 verbindet gegenüberliegende Ränder der Öffnung 10 und ist im vorliegenden Fall plattenförmig ausgebildet (was nicht zwingend ist). Genauso ist auch das Umlenkelement 13 plattenförmig ausgebildet (was nicht zwingend ist). Umlenkelement 13 und Stützelement 14 stehen senkrecht aufeinander (können jedoch auch eine andere Orientierung zueinander aufweisen).

Durchgezogene Pfeile 15 illustrieren eine anfängliche Expansionsrichtung des expandierbaren Elements 11, wenn dieses erwärmt wird. Das expandierbare Element 11 kann (relativ) frei expandieren, bis es an das Umlenkelement 13 stößt. Zu diesem Zeitpunkt wird eine weitere Expansion des expandierbaren Elements 11 in eine Richtung entlang der durchgezogenen Pfeile 15 blockiert und das Umlenkelement 13 zwingt das Material des expandierbaren Elements in Richtung der Öffnung 10, was durch gestrichelte Pfeile 16 symbolisiert wird. Dadurch wird die Öffnung 10 zuverlässig verschlossen.

Grundsätzlich (unabhängig von weiteren Merkmalen bzw. der konkreten Ausführungsform) kann die Öffnung eine Querschnittsfläche von mindestens 20 mm², vorzugsweise mindestens 50 mm² und/oder höchstens 200 mm², weiter vorzugsweise höchstens 100 mm² aufweisen. Ein (maximaler) Durchmesser der Öffnung kann mindestens 4 mm, vorzugsweise mindestens 8 mm und/oder höchstens 30 mm, vorzugsweise höchstens 15 mm betragen. Die Öffnung kann eine durchgehende Öffnung darstellen oder unterteilt sein, beispielsweise durch ein Stützelement, wie in den Figuren 1 bis 4 gezeigt. Begrifflich soll es sich jedoch nur dann um ein und dieselbe Öffnung handeln, wenn ein Abstand von voneinander abgetrennten Teilabschnitten der Öffnung kleiner ist (vorzugsweise mindestens dreimal oder mindestens fünfmal oder mindestens achtmal) als ein maximaler Durchmesser des jeweiligen angrenzenden Öffnungs-Teil-Abschnitts.

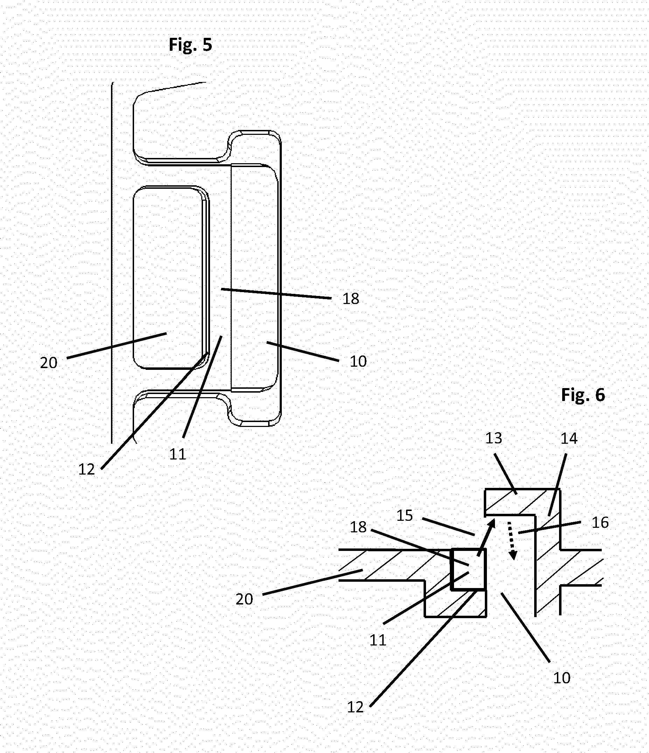

In den Figuren 5 und 6 ist eine alternative Ausführungsform gezeigt. Anders als in der Ausführungsform gemäß Figuren 1 bis 4 ist das expandierbare Element 11 nicht um die Öffnung 10 herum angeordnet, sondern verläuft (nur) an einer Seite dieser Öffnung 10 innerhalb einer Rand-Eck-Ausnehmung 12 und zwar in einem streifenförmigen (geraden) Abschnitt 18 (andere Formen sind denkbar; eine Streifenform kann auch abschnittsweise unterbrochen sein). Ein Umlenkelement 13 (das nur in Figur 6 gezeigt ist) ist auf einem Stützelement 14 abgestützt und überragt die Öffnung 10, so dass das expandierbare Material bei einer anfänglichen Expansion in Richtung des durchgezogenen Pfeiles 15 von dem Umlenkelement 13 blockiert wird und eine erzwungene Expansion in die Öffnung 10 hinein (durch den gestrichelten Pfeil 16 symbolisiert) macht. Auch in der Ausführungsform gemäß den Figuren 5 und 6 können Umlenkelement 13 und/oder Stützelement 14 plattenförmig sein. Eine Verbindungslinie zwischen Umlenkelement 13 und Stützelement 14 verläuft vorzugsweise parallel zu einer Längsrichtung von Umlenkelement 13 bzw. Stützelement 14.

Grundsätzlich kann dasselbe (ggf. monolithische) expandierbare Element einen oder mehrere (ringförmige und/oder streifenförmige) Abschnitte zum Verschließen eines jeweiligen Loches aufweisen.

### Bezugszeichenliste

- 10: Öffnung (Loch)
- 11: expandierbares Element
- 12: Rand-Eck-Ausnehmung
- 13: Umlenkelement (Dachelement)
- 14: Stützelement
- 15: durchgezogener Pfeil
- 16: gestrichelter Pfeil
- 17: ringförmiger Abschnitt
- 18: streifenförmiger Abschnitt
- 20: Trägerelement

## Patentansprüche

1. Bauteil zur Abschottung und/oder Begrenzung eines Hohlraums, insbesondere eines Kraftfahrzeugs, wie beispielsweise in einem Schweller, umfassend:
- mindestens eine Öffnung (10) zum Abfließen einer Tauchlackierungsflüssigkeit aus dem Hohlraum;
- mindestens ein expandierbares Element (11), das einen Abschnitt (17, 18) aufweist, der neben dem oder um die mindestens eine Öffnung (10) angeordnet ist und zum Verschließen der Öffnung (10) expandierbar ist; und
- mindestens ein Umlenkelement (13), das die mindestens eine Öffnung (10) zumindest teilweise überragt derart, dass das mindestens eine expandierbare Element (11) bei einer Expansion gegen das Umlenkelement (13) stößt und von diesem blockiert wird;
**dadurch gekennzeichnet, dass** ein Rand einer Projektion des Umlenkelements (13) auf einer durch die Öffnung (10) definierten Ebene vollständig innerhalb der Öffnung (10) liegt.

2. Bauteil nach Anspruch 1, **dadurch gekennzeichnet, dass** das Bauteil ein Dämmelement, insbesondere zur akustischen Dämmung, und/oder ein Abschottungselement zum Verschließen eines Hohlraums gegen den Durchtritt von Wasser und/oder Feuchtigkeit und/oder Schmutz und/oder ein Formstück ist.

3. Bauteil nach Anspruch 1 oder 2, **dadurch gekennzeichnet, dass** das expandierbare Element (11) einen ringförmigen Abschnitt (17) aufweist, der um die Öffnung (10) herum angeordnet ist oder **dadurch gekennzeichnet, dass** das expandierbare Element (11) einen streifenförmigen Abschnitt (18) aufweist, der auf einer Seite der Öffnung (10) angeordnet ist.

4. Bauteil nach einem der vorhergehenden Ansprüche, **dadurch gekennzeichnet, dass** die Öffnung ein Langloch ist.

5. Bauteil nach einem der vorhergehenden Ansprüche, **dadurch gekennzeichnet, dass** das Umlenkelement (13) auf einem oder mehreren Stützelementen (14) angeordnet ist, das vorzugsweise von den Bauteilen abragt,
vorzugsweise wobei das Stützelement platten- oder rippen- oder leistenförmig ist und/oder
vorzugsweise wobei das Stützelement zumindest teilweise innerhalb der Öffnung (10) angeordnet ist, und/oder
vorzugsweise zumindest teilweise an einen Rand der Öffnung (10) angeordnet ist und/oder
vorzugsweise wobei das Stützelement parallel oder senkrecht zu einer Längsrichtung der Öffnung (10) ausgerichtet ist.

6. Bauteil nach einem der vorhergehenden Ansprüche, **dadurch gekennzeichnet, dass** eine Form eines Umlenkelementes (13) mit einer Form der Öffnung (10) korrespondiert.

7. Bauteil nach einem der vorhergehenden Ansprüche, **dadurch gekennzeichnet, dass** eine Projektion des Umlenkelementes (13) auf einer durch die Öffnung (10) definierten Ebene die Öffnung um mindestens 50 %, vorzugsweise mindestens 70 %, weiter vorzugsweise mindestens 90 % ausfüllt.

8. Bauteil nach einem der vorhergehenden Ansprüche, **dadurch gekennzeichnet, dass** das expandierbare Element (11) expandiert ist derart, dass die Öffnung verschlossen ist.

9. Verwendung eines Bauteils nach einem der vorhergehenden Ansprüche für die akustische Dämmung und/oder die Abschottung, insbesondere gegenüber Wasser und/oder Feuchtigkeit und/oder zur Verstärkung und/oder Aussteifung eines Hohlraums, insbesondere eines Land-, Luft-oder Wasserfahrzeugs, und/oder eines Hohlraums eines Gebäudes.

10. Verfahren zur Tauchbeschichtung eines Hohlraumelements, das durch ein Bauteil nach einem der vorhergehenden Ansprüche abgeschottet oder begrenzt ist, **gekennzeichnet durch** die Schritte:
- Eintauchen des Hohlraumelements in eine Tauchlackierungsflüssigkeit;
- Abscheiden von Material aus der Tauchlackierungsflüssigkeit auf das Hohlraumelement;
- Entfernen der Tauchlackierungsflüssigkeit zumindest teilweise über die mindestens eine Öffnung (10) des Bauteils; und
- Expandieren des expandierbaren Elements (11) derart, dass die mindestens eine Öffnung (10) verschlossen wird, wobei das expandierbare Element (11) während der Expansion gegen das Umlenkelement (13) drückt und von diesem in Richtung der mindestens einen Öffnung (10) geleitet wird.

## Claims

1. Component for shielding and/or delimiting a cavity, in particular of a motor vehicle, such as in a sill, for example, said component comprising:
- at least one opening (10) for draining a dip-painting liquid from the cavity;
- at least one expandable element (11) which has a portion (17, 18) which is disposed beside or around the at least one opening (10) and is expandable for closing the opening (10); and
- at least one deflection element (13) which at least partially protrudes beyond the at least one opening (10) in such a manner that the at least one expandable element (11) when expanded impacts the deflection element (13) and is blocked by the latter;
**characterized in that** a periphery of a projection of the deflection element (13) on a plane defined by the opening (10) lies completely within the opening (10).

2. Component according to Claim 1, **characterized in that** the component is an insulating element, in particular for acoustic damping, and/or a shielding element for closing a cavity in relation to the ingress of water and/or moisture and/or dirt, and/or a formed part.

3. Component according to Claim 1 or 2, **characterized in that** the expandable element (11) has an annular portion (17) which is disposed around the opening (10), or **characterized in that** the expandable element (11) has a strip-shaped portion (18) which is disposed on one side of the opening (10).

4. Component according to one of the preceding claims, **characterized in that** the opening is an elongate hole.

5. Component according to one of the preceding claims, **characterized in that** the deflection element (13) is disposed on one support element (14) or a plurality of support elements (14), said support element (14)/support elements (14) preferably protruding from the components,
wherein the support element is preferably plate-shaped, rib-shaped, or slat-shaped, and/or
wherein the support element is preferably at least partially disposed within the opening (10), and/or is preferably at least partially disposed on a periphery of the opening (10), and/or
wherein the support element is preferably aligned so as to be parallel with or perpendicular to a longitudinal direction of the opening (10).

6. Component according to one of the preceding claims, **characterized in that** a shape of a deflection element (13) corresponds to a shape of the opening (10) .

7. Component according to one of the preceding claims, **characterized in that** a projection of the deflection element (13) on a plane that is defined by the opening (10) fills the opening by at least 50%, preferably at least 70%, furthermore preferably at least 90%.

8. Component according to one of the preceding claims, **characterized in that** the expandable element (11) is expanded in such a manner that the opening is closed.

9. Use of a component according to one of the preceding claims for acoustic damping and/or shielding, in particular in relation to water and/or moisture, and/or for reinforcing and/or stiffening a cavity, in particular of a land vehicle, aircraft, or marine craft, and/or a cavity of a building.

10. Method for dip-coating a cavity element which is shielded or delimited by a component according to one of the preceding claims, said method **characterized by** the following steps:
- dipping the cavity element into a dip-painting liquid;
- depositing material from the dip-painting liquid on the cavity element;
- at least partially removing the dip-painting liquid by way of the at least one opening (10) of the component; and
- expanding the expandable element (11) in such a manner that the at least one opening (10) is closed, wherein the expandable element (11) when expanded pushes against the deflection element (13) and by the latter is directed in the direction of the at least one opening (10).

## Revendications

1. Composant destiner à fermer et/ou délimiter une cavité, en particulier d'un véhicule automobile, comme par exemple dans un bas de marche, comprenant :
- au moins une ouverture (10) pour l'évacuation d'un liquide de peinture par immersion hors de la cavité ;
- au moins un élément expansible (11) qui présente une portion (17, 18) qui est disposée à côté ou autour de l'au moins une ouverture (10) et qui peut être expansé pour fermer l'ouverture (10) ; et
- au moins un élément de déflection (13) qui dépasse au moins en partie au-delà de l'au moins une ouverture (10) de telle sorte que l'au moins un élément expansible (11), lors de son expansion, bute contre l'élément de déflection (13) et soit bloqué par celui-ci ;
**caractérisé en ce qu'**un bord d'une projection de l'élément de déflection (13) sur un plan défini par l'ouverture (10) est situé complètement à l'intérieur de l'ouverture (10).

2. Composant selon la revendication 1, **caractérisé en ce que** le composant est un élément d'isolation, en particulier pour l'isolation acoustique, et/ou un élément d'obturation pour fermer une cavité vis-à-vis de la pénétration d'eau et/ou d'humidité et/ou de saleté et/ou est une pièce façonnée.

3. Composant selon la revendication 1 ou 2, **caractérisé en ce que** l'élément expansible (11) présente une portion annulaire (17) qui est disposée autour de l'ouverture (10) ou **caractérisé en ce que** l'élément expansible (11) présente une portion en forme de bande (18) qui est disposée sur un côté de l'ouverture (10).

4. Composant selon l'une quelconque des revendications précédentes, **caractérisé en ce que** l'ouverture est un trou oblong.

5. Composant selon l'une quelconque des revendications précédentes, **caractérisé en ce que** l'élément de déflection (13) est disposé sur un ou plusieurs éléments de support (14) faisant saillie de préférence depuis les composants,
de préférence l'élément de support étant en forme de plaque ou de nervure ou de baguette et/ou de préférence l'élément de support étant disposé au moins en partie à l'intérieur de l'ouverture (10) et/ou
étant disposé de préférence au moins en partie au niveau d'un bord de l'ouverture (10) et/ou l'élément de support étant orienté de préférence parallèlement ou perpendiculairement à une direction longitudinale de l'ouverture (10).

6. Composant selon l'une quelconque des revendications précédentes, **caractérisé en ce qu'**une forme d'un élément de déflection (13) correspond à une forme de l'ouverture (10).

7. Composant selon l'une quelconque des revendications précédentes, **caractérisé en ce qu'**une projection de l'élément de déflection (13) sur un plan défini par l'ouverture (10) remplit l'ouverture à raison d'au moins 50%, de préférence à raison d'au moins 70 %, plus préférablement à raison d'au moins 90 %.

8. Composant selon l'une quelconque des revendications précédentes, **caractérisé en ce que** l'élément expansible (11) est expansé de telle sorte que l'ouverture soit fermée.

9. Utilisation d'un composant selon l'une quelconque des revendications précédentes pour l'isolation acoustique et/ou l'obturation, en particulier vis-à-vis de l'eau et/ou de l'humidité et/ou pour l'amplification et/ou la rigidification d'une cavité, en particulier d'un véhicule terrestre, aérien ou aquatique, et/ou d'une cavité d'un bâtiment.

10. Procédé de revêtement par immersion d'un élément de cavité qui est obturé ou délimité par un composant selon l'une quelconque des revendications précédentes, **caractérisé par** les étapes suivantes :
- immersion de l'élément de cavité dans un liquide de peinture par immersion ;
- dépôt de matériau provenant du liquide de peinture par immersion sur l'élément de cavité ;
- élimination du liquide de peinture par immersion au moins en partie par le biais de l'au moins une ouverture (10) du composant ; et
- expansion de l'élément expansible (11) de telle sorte que l'au moins une ouverture (10) soit fermée, l'élément expansible (11), pendant son expansion, pressant contre l'élément de déflection (13) et étant guidé par celui-ci dans la direction de l'au moins une ouverture (10) .
